# EUROPÄISCHE PATENTSCHRIFT

(11) **EP 1 931 565 B1**
(45) Veröffentlichungstag und Bekanntmachung des Hinweises auf die Patenterteilung: **02.03.2011**
(21) Anmeldenummer: 06806849.3
(22) Anmeldetag: 27.09.2006
(51) Int. Cl.: B64C 7/00, B64C 9/02, B64C 9/14, B64C 9/16, B64C 9/22, B64C 9/32, B64C 1/14, C09D 175/04

(54) **POLYURETHANLACKE ALS SCHEUERSCHUTZ-BESCHICHTUNGEN**
POLYURETHANE LACQUERS AS ABRASION-RESISTANT COATINGS
VERNIS DE POLYURETHANE UTILISE COMME REVETEMENT ANTI-ABRASION

(30) Priorität: 07.10.2005 DE 102005048434
(43) Veröffentlichungstag der Anmeldung: 18.06.2008
(73) Patentinhaber: Airbus Deutschland GmbH, 21129 Hamburg (DE); Fraunhofer-Gesellschaft zur Förderung der angewandten Forschung e.V., 80686 München (DE)
(72) Erfinder: STENZEL, Volkmar, 27321 Thedinghausen (DE); KAUNE, Martin, 28357 Bremen (DE); LOHNER, Hubertus, 28213 Bremen (DE); SCHRAMM, Ottmar, 27624 Drangstedt (DE)
(74) Vertreter: Eisenführ, Speiser & Partner
(86) Internationale Anmeldenummer: PCT/EP2006/066796
(87) Internationale Veröffentlichungsnummer: WO 2007/042398

(56) Entgegenhaltungen:
- DE-A1- 2 556 203
- DE-A1- 4 304 491
- DE-A1- 19 529 987
- GB-A- 2 323 576
- US-A- 4 725 026
- US-A- 5 845 877
- US-A1- 2002 137 872
- US-B1- 6 291 078

## Beschreibung

Die vorliegende Erfindung betrifft primär die Verwendung bestimmter füllstoffhaltiger Polyurethanlacke als abriebfeste Beschichtung, insbesondere für den sichtbaren Scheuerbereich von im Betrieb mechanisch aufeinander reibenden Flugzeugbauteilen. Besonderes Augemerk liegt hierbei auf dem Bereich der Flugzeuglandeklappen im Kontaktbereich mit den Spoilern.

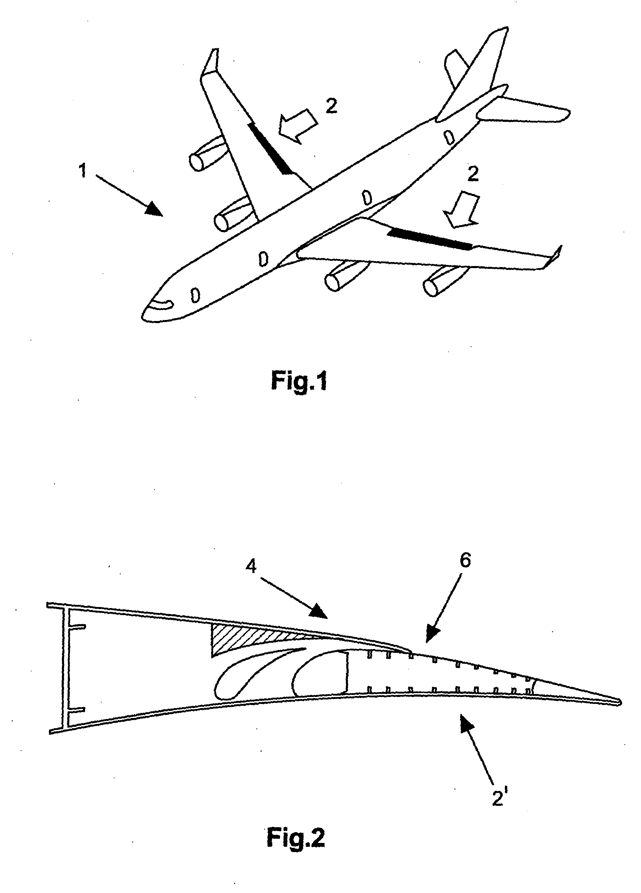

Moderne Flugzeuge besitzen Landeklappen mit zugehörigen Spoilern, die sich am, in Flugrichtung gesehen, hinteren Bereich der Flügel befinden, vgl. Fig. 1. Beim Start- sowie beim Landevorgang werden die Landeklappen zur Einstellung bestimmter aerodynamischer Eigenschaften ein- bzw. ausgefahren. Dabei reibt bzw. scheuert der Spoiler auf einem Bereich der Landeklappe, so dass dieser vor Beschädigungen geschützt werden muss, vgl. Fig. 2.

Derzeit werden die abriebgefährdeten Bereiche der Landeklappen im Flugzeugbau durch Aufbringen dünner Stahlbleche, sogenannter Scheuerschutzstreifen oder Scheuerschutzbleche, geschützt. Die Anbringung der Scheuerschutzstreifen (Scheuerschutzbleche) erfolgt aufwändig gemäß folgendem Ablauf:

Nach partiellem Abkleben der Landeklappe (im Bereich außerhalb des Scheuerschutzbleches) wird der zu schützende Bereich der Landeklappe mit lösungsmittelhaltigem Reiniger gereinigt. Anschließend werden Scheuerschutzbleche mittels eines Dichtmittels (Klebers) auf die Landeklappe appliziert. Das Dichtmittel wird dann unter Vakuum über einen längeren Zeitraum (mindestens 12 Stunden) ausgehärtet. Nach dem Aushärten folgt eine Nachbearbeitung, welche insbesondere Reinigungs- und Demaskierungsschritte umfasst. Erst anschließend wird die Landeklappe lackiert, wozu der Bereich der Scheuerschutzbleche maskiert und später demaskiert werden muss.

Der Einsatz von Scheuerschutzstreifen im Bereich der Landeklappen ist insbesondere mit den folgenden Nachteilen verbunden:
- Die Verwendung von Scheuerschutzblechen zumeist geringer Dicke führt zu häufigem Knicken bzw. Verkratzen vor und während des Fügens und somit zu einem hohen Ausschussanteil.
- Die Fertigungsschritte des Reinigens des zu schützenden Bereichs der Landeklappe sowie des Fügens der Scheuerschutzbleche erfordern eine hochpräzise Vorgehensweise. Bereits geringe Abweichungen von den Vorgaben führen zu Fehlern in der Haftung des Scheuerschutzbleches an der Landeklappe bzw. zu einer Nicht-Einhaltung der Anforderungen an die optische Gestaltung.
- Zur Reinigung der Landeklappe und der Scheuerschutzstreifen vor dem Fügen werden lösungsmittelhaltige (VOC-haltige) Reinigungsmittel eingesetzt, da nur so die notwendige Oberflächenqualität erreicht werden kann. Der Einsatz lösungsmittelhaltiger Reinigungsmittel wird jedoch in zunehmendem Maße als ungewünscht angesehen.
- Die Reinigungs- und Fügevorgänge sind sehr zeitintensiv.
- Eine lokale Reparatur beschädigter Scheuerschutzbleche ist nicht möglich. Jede Reparatur eines beschädigten Scheuerschutzbleches ist mit dessen Ablösung von der Landeklappe und erneuten Reinigungs- und Fügeschritten verbunden.

In der Patentanmeldung US2002/0137872 A1 werden Beschichtungszusammensetzungen mit erhöhter Beständigkeit gegen Beschädigung und/oder Zerkratzen offenbart Die Beschichtungen enthalten ein filmbildendes Harz und darin verteilte Partikel mit einer mittleren Teilchengröße von 0,1 bis 15 µm, wobei die Härte der Partikel ausreichend sein muss, um einen erhöhte Widerstand gegen Abrieb und Zerkratzen zu erzielen. Typischerweise beträgt die Mohs-Härte der Partikel mindestens 4,5. Als typische Anwendungsgebiete werden Baugruppen von Kraftfahrzeugen und Haushaltsgeräten genannt.

Die Patentanmeldung DE 43 04 491 A1 beschreibt die Verwendung von pulver förmigen harten Füllstoffen zur Erhöhung der Abriebfestigkeit in strahlenhärtbaren Lacken, Beschichtungen und Druckfarben, wobei der pulverförmige harte Füllstoff ausgewählt werden kann aus Quarz, synthetischem Siliciumdioxid, Basalt, Glasmehl, Glaskugeln, Glasfasern, Siliciumcarbid, Wolframcarbid oder Korund oder deren Mischungen und eine mittlere Teilchengröße im Bereich von 1 bis 50 µm aufweisen kann. Die strahlenhärtbaren Systeme sind vorzugsweise solche auf der Basis von Acrylester, Diese Beschichtungssysteme werden insbesondere als Lack oder Beschichtung für Holz und Holzwerkstoffe, als Lack, Beschichtung oder Druckfarbe für Kunststoffe, oder als Lack, Beschichtung oder Druckfarbe für Papier und Karton eingesetzt.

Aus der Patentanmeldung DE 195 29 987 A1 ist ein Verfahren zur Hersteilung hochabriebfester Lackschichten auf festem Trägermaterial mit Kunstharzlack, wie Acrylatharz-, Polyesterharz- oder Polyurethanharzlack und einem verschleißhemmenden Mittel bekannt, wobei das verschleißhemmende Mittel unmittelbar auf die Oberfläche des Trägermaterials gestreut und darauf anschließend Lack aufgetragen wird oder das verschleißhemmende Mittel auf die mit Lack bereits versehene Oberfläche des Trägermaterials gestreut und jeweils danach der Auftrag aus Lack und verschleißhemmendem Mittel gehärtet wird. Als verschleißhemmendes Mittel kann ein Metalloxid, wie Aluminiumoxid und/oder Siliziumdioxid verwendet werden. Als typische Trägermaterialien werden Holzwerkstoffe, mitteldichte Faserplatten, hochdichte Faserplatten, Sperrholzplatten. Spanplatten sowie mit Furnier, Folie, oder Papier beschichtete Trägermaterialien , erwähnt.

Es war daher die Aufgabe der vorliegenden Erfindung, zumindest einige der vorstehend genannten Nachteile zu lindern oder zu beseitigen, die mit dem Einsatz von Scheuerschutzblechen (Scheuerschutzstreifen) verbunden sind.

Gemäß einem ersten Aspekt wird die gestellte Aufgabe erfindungsgemäß gelöst durch die Verwendung eines Lackes umfassend
- eine Polyurethan matrix auf Basis aliphatischer Komponenten und
- in die Polyurethanmatrix eingebettete, die Abriebbeständigkeit erhöhende Füllstoffe
als abriebfeste Beschichtung von (a) Flugzeuglandeklappen im Kontaktbereich mit den Spoilern.

Es hat sich überraschenderweise gezeigt, dass Polyurethanlacke, welche die Abriebbeständigkeit erhöhender Füllstoffe umfassen, geeignet sind, anstelle der bislang eingesetzten Scheuerschutzbleche verwendet zu werden.

Die eingesetzten Lacke umfassen eine Polyurethanmatrix auf Basis aliphatischer Komponenten, die allenfalls geringe (für das Auge nicht sichtbare) Verfärbungen bei thermischer Belastung zeigt (Temperaturbereich -55 bis 100 °C), In die Polyurethanmatrix eingebettet sind die Abriebbeständigkeit erhöhende Füllstoffe.

Das Lacksystem wird im noch unausgehärteten Zustand z. B. auf den External Primer oder auf den Extemal Topcoat einer Landeklappe mittels Aufsprühen oder anderer geeigneter Verfahren appliziert, um dort auszuhärten. Die Trockenschichtdicke liegt dabei regelmäßig im Bereich zwischen 10 µm und 300 µm. Um Schichtdicken > 50 µm zu erreichen, wird der beschriebene Applikationsvorgang gegebenenfalls mehrmals wiederholt, bis die gewünschte Schichtdicke erreicht ist.

Lacke umfassend eine Polyurethanmatrix auf Basis aliphatischer-Komponenten sowie in die Polyurethanmatrix eingebettete, die Abriebbeständigkeit erhöhende Füllstoffe sind nicht nur als abriebfeste Beschichtung von (a) Flugzeuglandeklappen im Kontaktbereich mit den Spoilern geeignet. Ein weiteres mögliches Einsatzfeld ist beispielsweise (b) der Scheuerbereich der Cargo Doors, aber auch (c) in den Scheuerbereichen anderer im Betrieb mechanisch aufeinander reibender Flugzeugbauteile können die besagten Lacke vorteilhaft eingesetzt werden. Entsprechende Verwendungen sind ein weiterer Gegenstand der vorliegenden Erfindung.

Ein weiterer Aspekt der vorliegenden Erfindung betrifft eine Flugzeug-Landeklappe mit einer abriebfesten Beschichtung im Kontaktbereich mit den Spoilern, wobei die Beschichtung aus einem ausgehärteten Lack besteht, umfassend oder bestehend aus:
- einer Polyurethanmatrix auf Basis aliphatischer Komponenten und
- in die Polyurethanmatrix eingebetteten, die Abriebbeständigkeit erhöhenden Füllstoffen.

Ferner betrifft die vorliegende Erfindung bestimmte neue abriebfeste Lacke, die insbesondere zur Beschichtung von Flugzeuglandeklappen im Kontaktbereich mit den Spoilern geeignet sind.

Überrachenderweise hat es sich in langwierigen internen Untersuchungen gezeigt, dass die erfindungsgemäß einzusetzenden Lacke (Lacksysteme) sämtlichen Erfordernissen genügen, die im Zusammenhang mit dem Scheuerschutz der Landeklappen verbunden sind, und zwar insbesondere in mechanischer und
optischer Hinsicht. Unter den vielfältigen Erfordernissen sind insbesondere die Folgenden von hoher Relevanz:
- Haftung am Substrat
- Abriebbeständigkeit
- Chemikalienbeständigkeit (insbesondere gute Beständigkeit gegen Wasser und Hydraulikflüssigkeit (Skydrol))
- Vergilbungsresistenz (thermische sowie UV-Farbbeständigkeit). Eine hohe UV-Beständigkeit ließ sich in eigenen Untersuchungen nur bei Verwendung einer Polyurethanmatrix auf Basis aliphatischer Komponenten erreichen; der Einsatz aromatischer Komponenten führte zu UV-instabilen Lacken.

Es ergaben sich überdies folgende Vorteile:
- Bei erfindungsgemäßer Verwendung der angegebenen Lacke als Feuerschutz-Lacke (abriebfeste Beschichtung) insbesondere auf Flugzeuglandeklappen im Kontaktbereich mit den Spoilern kann die Applikation des Lacks vorteilhafterweise mittels eines Spritzprozesses erfolgen. Diese Vorgehensweise ist unter Zeit- und Kostengesichtspunkten erheblich günstiger und weniger störanfällig als die bisher verwendeten Verfahren zur Applikation von Scheuerschutzblechen. Fertigungsprozess kann automatisiert werden.
- Bei der erfindungsgemäßen Verwendung von Lacken auf Polyurethanbasisentfällt der mit dem Einsatz von Scheuerschutzblechen verbundene hohe Ausschussanteil.
- Im Vergleich mit dem Einsatz von Scheuerschutzblechen entfällt ein Maskierungs- und Demaskierungsschritt.
- Beschädigte abriebfeste Beschichtungen, die unter erfindungsgemäßer Verwendung eines Polyurethan-Lacksystemes hergestellt wurden, können nach Anschleifen der Beschichtungsoberfläche lokal repariert werden.
- Vor Applikation der abriebfesten Beschichtungen unter erfindungsgemäßer Verwendung eines Lackes auf Polyurethanbasis kann die Reinigung der Bauteile (insbesondere Landeklappen) mit Reinigern erfolgen, die vergleichsweise geringe Mengen an organischen Lösungsmitteln umfassen.
- Die erfindungsgemäße Verwendung von Lacken auf Polyurethanbasis mit deren eingebetteten die Abriebbeständigkeit erhöhenden Füllstoffen führte zu guten Reibeigenschaften mit Reibpartnern aus Stahl, CFK und Titan bei Temperaturen im Bereich zwischen -55°C + 60°C.
- Im Vergleich mit dem Einsatz von Scheuerschutzblechen resultiert eine bedeutende Gewichtsersparnis (ca. 10 kg bei Einsatz auf dem Flugzeug des Typs Airbus A 340)

Wenngleich eine Vielzahl unterschiedlicher Füllstoffe in die Polyurethanmatrix eingebettet werden können, um die Abriebbeständigkeit des entsprechenden Lackes zu erhöhen, sind doch bestimmte Füllstoffe stark bevorzugt. So ist es beispielsweise besonders vorteilhaft, Füllstoffe auszuwählen aus der Gruppe bestehend aus:
Füllstoffen mit einer Mohs-Härte von zumindest 7 und einer Korngröße 0,1 µm < d₅₀ < 30 µm, vorzugsweise 2 µm < d₅₀ < 15 µm,
Füllstoffen mit einer Mohs-Härte von höchstens 2 und einer Korngröße 3 µm < d₅₀ < 50 µm
und deren Mischungen.

Füllstoffe mit einer Mohs-Härte von zumindest 7 werden nachfolgend auch als "harte" Füllstoffe und Füllstoffe mit einer Mohs-Härte von höchstens 2 werden nachfolgend auch als "weiche" Füllstoffe bezeichnet.

Überraschenderweise hat sich gezeigt, dass sowohl der Einsatz harter als auch der Einsatz weicher Füllstoffe dazu führt, dass sich die Abriebfestigkeit eines Polyurethanlackes, der als Scheuerschutz auf Landeklappen gegenüber Spoilern eingesetzt werden soll, deutlich erhöht, sofern dabei die angegebenen Korngrößenbereiche eingehalten werden. Besonders vorteilhaft ist der gleichzeitige Einsatz von harten und weichen Füllstoffen in der Polyurethanmatrix.

Die harten Füllstoffe sind vorzugsweise keramische Füllstoffe; die weichen Füllstoffe sind vorzugsweise Kunststoff-Füllstoffe.

Vorteilhafterweise werden als Füllstoffe Materialien eingesetzt, welche selbst keine besondere oder gar aufdringliche Eigenfärbung besitzen, also insbesondere weiße Materialien. Der Einsatz farbiger oder auch schwarzer Füllstoffe ist jedoch ebenfalls möglich, sofern die eingesetzten Füllstoffe erst bei hohen Zuschlagsmengen den Farbton des fertigen Lackes maßgeblich beeinflussen, d. h. farbtongebend sind. In eigenen Untersuchungen hat sich gezeigt, dass Graphit (als schwarzes, weiches Füllstoff-Material) regelmäßig den Farbton eines erfindungsgemäß zu verwendenden Lackes negativ beeinflusst; bevorzugte erfindungsgemäß zu verwendende Lacke sind somit graphitfrei.

Die keramischen Füllstoffe sind vorzugsweise ausgewählt aus der Gruppe bestehend aus:
Siliciumcarbid, Siliciumdioxid, Aluminiumoxid, Zirkonoxid, Spinell, Bornitrid und deren Mischungen.

Die weichen Füllstoffe bestehen vorzugsweise aus ultrahochmolekularem Polyethylen wie z. B. GUR 2126 der Fa. Ticona.

Vorzugsweise werden in den erfindungsgemäß einzusetzenden Lacken Mischungen von harten und weichen Füllstoffen (mit den jeweils oben angegebenen Korngrößen) eingesetzt, wobei das Gewichtsverhältnis der Füllstoffe im Bereich von 1:9 bis 9:1 liegt. Bei Einsatz von Mischungen aus harten und weichen Füllstoffen wurden in eigenen Untersuchungen besonders gute Resultate erzielt.

Auch die Konzentration der harten bzw. weichen Füllstoffe in den erfindungsgemäß zu verwendenden Lacken hat Bedeutung für den Scheuerschutz. Vorzugsweise liegt der Anteil an harten Füllstoffen mit einer Korngröße im oben angegebenen Bereich im Bereich von 5 bis 35 Gew.-%, vorzugsweise im Bereich von 7 bis 15 Gew.-% und/oder der Anteil an weichen Füllstoffen mit einer Korngröße im oben angegebenen Bereich im Bereich von 5 bis 35 Gew.-%, vorzugsweise im Bereich von 7 bis 15 Gew.-%, jeweils bezogen auf die Gesamtmasse des Lackes.

Wie erwähnt betrifft die vorliegende Erfindung auch eine Flugzeug-Landeklappe mit einer abriebfesten Beschichtung im Kontaktbereich mit den Spoilern, wobei die Beschichtung aus einem ausgehärteten Lack besteht, umfassend oder bestehend aus einer Polyurethanmatrix auf Basis aliphatischer Komponenten und in die Polyurethanmatrix eingebetteten, die Abriebbeständigkeit erhöhenden Füllstoffen.

Vorzugsweise besteht die Beschichtung der Flugzeug-Landeklappe dabei aus einem Lack, wie er vorstehend als bevorzugt angegeben ist.

Die vorliegende Erfindung betrifft auch bestimmte abriebfeste Lacke, die insbesondere zur Beschichtung von Flugzeuglandeklappen im Kontaktbereich mit den Spoilern geeignet sind, aber selbstverständlich auch für andere Zwecke eingesetzt werden können. Ein erfindungsgemäßer abriebfester Lack umfasst
- eine Polyurethanmatrix auf Basis aliphatischer Komponenten und
- in die Polyurethanmatrix eingebettete, die Abriebbeständigkeit erhöhende Füllstoffe,
wobei die Füllstoffe ausgewählt sind aus der Gruppe bestehend aus:

Füllstoffen mit einer Mohs-Härte von zumindest 7 und einer Korngröße 0,01 µm < d₅₀ < 30 µm
und

Mischungen solcher Füllstoffe mit Füllstoffen mit einer Mohs-Härte von höchstens 2 und einer Korngröße 3 µm < d₅₀ < 50 µm.

Dabei gilt hinsichtlich der Auswahl der Füllstoff-Materialien, Gewichtsverhältnisse (bei einer Füllstoff-Mischung) und Konzentrationen das Vorgesagte jeweils entsprechend.

Die erfindungsgemäßen und erfindungsgemäß zu verwendenden Lacke umfassen neben den angegebenen Bestandteilen (a) Polyurethanmatrix und (b) ausgewählte Füllstoffe regelmäßig noch weitere Bestandteile, insbesondere Additive (Oberflächenadditive, Netzadditive, Entschäumer), Pigmente (farbgebende Bestandteile; sofern bestimmte Pigmente im Einzelfall als "Füllstoffe" der oben genannten Art aufgefasst werden können, handelt es sich im Sinne des vorliegenden Textes nicht um weitere Bestandteile des Lackes, sondern um "Füllstoffe") sowie ggf. weitere Bestandteile.

Die Erfindung wird nachfolgend anhand von Beispielen unter Bezugnahme auf die folgenden Figuren näher erläutert. Es zeigen:
- Figur 1: ein Flugzeug mit Landeklappen zum Aufbringen von Scheuerschutz- beschichtungen,
- Figur 2: eine Schnittansicht durch einen Flügelteil mit Landeklappe zur Auf- bringung von Scheuerschutzbeschichtungen,
- Figur 3: einen Reibprüfstand zur Untersuchung der Abriebbeständigkeit von Lacken,
- Figur 4a: eine schematische Darstellung der dem Reibprüfstand gemäß Figur 3 zugrundeliegenden Kinematik und Prüfgeometrie in einer perspektivi- schen Darstellung,
- Figur 4b: einen Ausschnitt der Figur 4a in einer Seitenansicht,
- Figur 5: ein Diagramm über den Einfluss der Korngröße harter Füllstoffe auf das Abriebverhalten,
- Figur 6: ein Diagramm über den Einfluss der Korngröße weicher Füllstoffe auf das Abriebverhalten und
- Figur 7: ein Diagramm über den Einfluss der Füllstoffkonzentration auf die Abriebbeständigkeit.

Das Flugzeug 1 gemäß Figur 1 weist an seinen Flügeln Landeklappen 2 auf, die beim Start- sowie beim Landevorgang ein- bzw. ausgefahren werden.

Figur 2 zeigt in der Schnittansicht, dass die Landeklappe 2' unterhalb eines Spoilers 4 angeordnet ist. Sofern der Spoiler 4, wie in Figur 2 dargestellt, nicht hochgeklappt ist, stehen der Spoiler 4 und die Landeklappe 2' in einem Reibbereich 6 miteinander in Kontakt. Wird die Landeklappe 2' beispielsweise zum Landen ausgefahren, so reibt der Spoiler 4 in diesem Reibbereich 6 auf der Landeklappe 2' was eine Reibbelastung für die Landeklappe 2' in diesem Reibbereich 6 bedeutet.

### Beispiel 1: Abriebtest gemäß PrEN 6124:

Es wurden Abriebtests gemäß PrEN 6124 auf einem speziellen Reibprüfstand durchgeführt, um das Abriebverhalten, wie es an der Flugzeug-Landeklappe im Betrieb auftreten wird, möglichst präzise zu simulieren.

Zu prüfende Lacke wurden hierfür auf ein Probeblech (Aluminium) appliziert und dann mit diesem auf einem Probentisch eines Reibprüfstands gehalten.

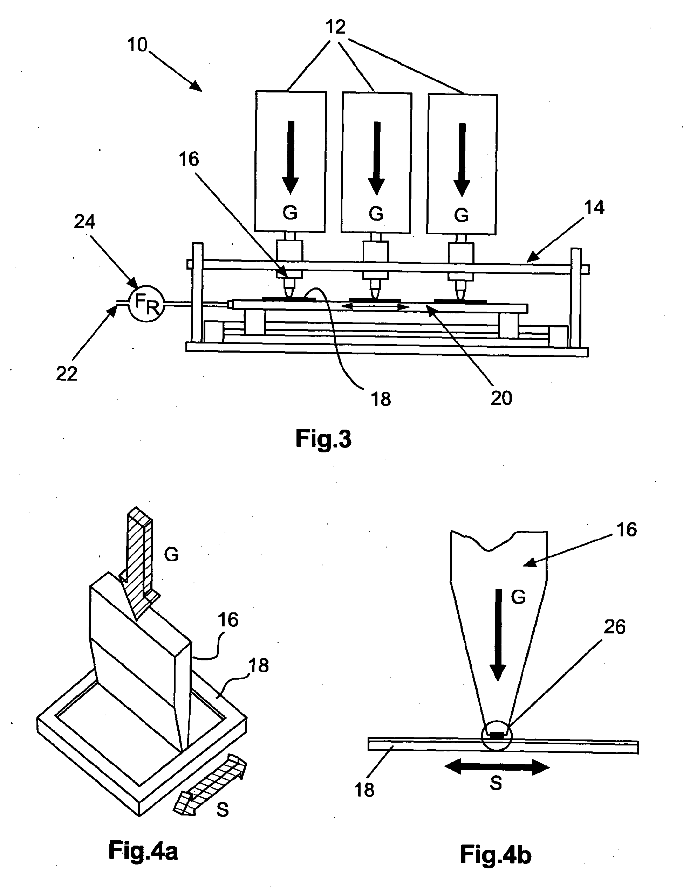

Die lackierten Probebleche entsprechen den schutzlackierten Bereichen einer Landeklappe. Ein Reibprüfstand 10 gemäß PrEN 6124 ist in Figur 3 dargestellt. Der Reibprüfstand 10 weist drei mit Wolframpulver gefüllte Belastungsbehälter 12 auf, die jeweils eine Gewichtskraft von G = 566 N haben. Die Belastungsbehälter 12 werden in einem linearlagergeführten, höhenverstellbaren und arretierbaren ersten Probenhalter 14 gehalten. Das Gewicht der Belastungsbehälter 12 lastet jeweils auf einem linearlagergeführten zweiten Probenhalter 16. Dieser zweite Probenhalter 16 hält einen einer Spoilerklappe entsprechenden Reibpartner, der als Gegenkörper auf je einem Probeblech 18 lastet. Die Probebleche 18 sind auf einem lineargeführten Probentisch 20 angeordnet, der durch einen hydraulischen Antrieb 22 in eine horizontale Bewegung mit der Geschwindigkeit v = 35 mm/s. bei einem Reibweg s = 80 mm gebracht wird. Es erfolgt eine SPS-Steuerung der Lastspielzahl. Mittels der Kraftmessdose 24 erfolgt die Messung der Reibkraft, woraus der Reibbeiwert µ bestimmt wird.

Die Konditionierung der Probebleche erfolgte wie folgt:

Die zu prüfenden Lacke wurden auf Aluminiumplatten appliziert und 7 Tage bei Raumtemperatur gelagert. Anschließend wurden Abriebprüfungen auf dem Reibprüfstand nach PrEN 6124 vorgenommen.

Auf dem Reibprüfstand nach PrEN 6124 wurde jeweils ein Reibweg von 80 mm durchlaufen. Die beaufschlagte Gewichtskraft betrug 566 N pro Zylinder, d. h. pro Probeblech. Die Geschwindigkeit des lineargeführten Probentisches betrug 35 mm/s.

In die Probenhalter wurden Proben eingespannt, welche aus den für Spoilerkanten üblichen Materialien gefertigten waren (z. B. CFK, Titan, Stahl 1.4548, Polyamid, CuBe und Silicongummi). Die Abmessungen der eingespannten Proben betrugen jeweils 2 x 80 mm.

Auf die zu prüfenden Lacke wirkte somit jeweils eine Maximallast von 3,54 N/mm²_{.}

Weitere Angaben zur Kinematik und Prüfgeometrie einerseits sowie zur Probenanordnung andererseits ergeben sich aus den Figuren 4a und 4b.

Die Figur 4a zeigt in einer perspektivischen Ansicht die grundsätzliche Probenanordnung. Auf dem zweiten Probenhalter 16 lastet die Gewichtskraft G und drückt somit den Probenhalter 16 mit enthaltener Probe auf das Probenblech 18. Das Probenblech wird entlang des Reibweges s, der 80 mm beträgt, mit einer Geschwindigkeit von v = 35 mm/sek. oszillierend bewegt. Dabei besteht eine Probenbelastung von F = 3,54 N/mm².

In der Seitenansicht gemäß Figur 4b ist zu erkennen, dass in dem zweiten Probenhalter 16 die Probe 26 aufgenommen ist und auf die Probeplatte 18 durch die Gewichtskraft G gepresst wird. Die Probe 26, die für die Spoilerklappe steht, weist eine Auflagefläche zur Probenfläche 18 hin von 2 x 80 mm auf. Dabei ist die Probe 26 in eine 0,5 mm tiefe Nut geklebt.

Zum Vergleich unterschiedlicher Lacke hinsichtlich ihrer Abriebbeständigkeit mittels des Prüfstandes gemäß PrEN 6124 wurden entsprechend unterschiedlich lackierte Probenbleche untersucht und der Abrieb nach maximal 2000 Schwingspielen ermittelt; dabei erfolgte alle 250 Schwingspiele eine Gewichtskontrolle der jeweiligen Probe.

Zum Vergleich entsprechender Gegenkörper (Spoilerproben) wurden unterschiedliche Spoilermaterialien einer Belastung von maximal 2000 Schwingspielen unterzogen; alle 250 Schwingspiele erfolgte dabei eine Gewichtskontrolle der Gegenkörper.

Mit Spoilerproben aus Stahl, Titan und CFK (kohlenstofffaserverstärkter Kunststoff) wurde ein Reibwert µ ≤ 0,6 erzielt.

Als Prüftemperaturen wurden eingestellt: 23 °C, -55°C und 60 °C.

Als Prüfmedien wurden eingesetzt: Skydrol und Normschmutz.

Für die Reibverschleißprüfungen war es u. a. erforderlich, diese auch bei Temperaturen von 60 °C und -55°C durchzuführen. Es sollte damit gewährleistet werden, dass die Verschleißschutzschicht auch in Einsatzgebieten mit hoher Hitzeeinwirkung (Flugzeugstandort in heißen Gebieten der Erde) wirksam ist. Gleiches gilt für extreme Kälte, wie sie zum Beispiel bei den bzw. vor den Landeanflügen auftritt.

Entsprechende Untersuchungen wurden mittels einer für diesen Zweck konzipierten Probeaufnahme durchgeführt, die mit Kühl- bzw. Heizflüssigkeit gespült wurde.

Die eigenen Untersuchen gemäß PrEN 6124 führten zu dem Ergebnis, dass durch Einbettung von oben beschriebenen, die Abriebbeständigkeit erhöhenden Füllstoffen in einer Polyurethanmatrix eine sehr hohe Abriebbeständigkeit erreicht werden kann, welche den hohen Anforderungen in der Flugzeugindustrie genügen. Als besonders vorteilhaft hat sich dabei der Einsatz von Füllstoffen erwiesen, die weiter oben als bevorzugt gekennzeichnet sind.

Es sollte in diesem Zusammenhang erwähnt werden, dass nicht nur Lacke auf Polyurethanbasis mit integrierten Füllstoffen einen Verschleißwiderstand besitzen, der hohen Anforderungen gerecht wird. Auch bestimmte Epoxidlacke wie z. B. das Handelsprodukt Ceram Kote 54 erwiesen sich insoweit durchaus als tauglich; doch versagten die nicht erfindungsgemäß zu verwendenden Lacke in anderen Tests, welche durchgeführt wurden, um die Anforderungen in der Flugzeugindustrie an praxistaugliche Scheuerschutzsysteme zu berücksichtigen, vgl. die folgenden Beispiele.

### Beispiel 2: Temperaturtest/thermische Vergilbungsprüfung:

Zu prüfende Lacksysteme wurden auf Aluminiumplatten des im Flugzeugbau üblichen Typs 2024 T3 lackiert und 7 Tage bei Raumtemperatur gelagert. Anschließend wurden die jeweiligen Farbtöne mit einen Farbmessgerät als Standard eingemessen. Die Proben wurden sofort danach bei 110°C bzw. 150 °C gelagert d. h..bei Temperaturen wie sie auf Flugzeugoberflächen in heißen Klimaten auftreten können. Nach der einhundertstündigen Lagerung bei erhöhter Temperatur wurde die Farbtonabweichung durch Vergleich mit dem Standard (Anfangswert) bestimmt.

Der Farbraum bei der Farbtonmessung setzt sich zusammen aus den Werten Da(rot/grün-Achse), Db (blau/gelb-Achse) und DL (hell/dunkel-Achse). Als aus den drei zuvor genannten Werten zusammengesetzte Maßzahl beschreibt DE bei einem Farbtonvergleich, wie vergleichbar zwei Farbtöne sind. Dabei sind der Db- und der DE - Wert ein Kriterium für die Farbtonveränderung durch UV-Licht oder thermische Beanspruchung. Eine Verschiebung auf der Blau/Gelb-Achse, d.h. eine Vergilbung, spiegelt sich bei der Vergleichsmessung sowohl im Db-Wert als auch im DE-Wert wieder.

Die erfindungsgemäß zu verwendenden Lacke auf Basis von Polyurethan wiesen jeweils eine nur sehr geringe Farbtonabweichung auf.

Im Unterschied dazu ergab sich bei Verwendung des Epoxidsystems Ceram Kote 54 eine sehr starke Farbtonabweichung, die einer sehr starken Vergilbung entspricht und mit einer mechanisch inakzeptablen Versprödung einhergeht.

### Beispiel 3: Gitterschnittprüfung nach DIN EN ISO 2409:

Mittels einer Gitterschnittprüfung nach DIN EN ISO 2409 wurden die Haftfestigkeiten bestimmter Lacke untersucht.

Die erfindungsgemäß zu verwendenden Lacke zeichneten sich hierbei durch besonders gute Eigenschaften aus.

### Beispiel 4: Einfluss von Füllstoff-Material und Korngröße auf die Abriebeigenschaften :

### 4.1 Harte Füllstoffe:

Ausgehend von einem Flugzeugdecklacksystem auf Polyurethanbasis (basierend auf aliphatischen Komponenten) wurden Lacke mit hochabriebfesten, harten Füllstoffen verschiedener Korngröße und Materialart hergestellt.

Untersucht wurden drei unterschiedliche erfindungsgemäß zu verwendende Lacke, für deren Füllstoffe (FS 1, FS 2, FS 3) das Folgende galt:
- FS 1:: Siliciumcarbid (Mohs-Härte: 9,6); Korngröße: d ₅₀ = 1,5 µm; Farbe: Schwarz, jedoch erst bei sehr hohen Zuschlagsmengen farbtonge- bend. Anmerkung: Analoge Untersuchungen wurden auch mit anderen Korngrößen und Farben durchgeführt.
- FS 2:: Aluminiumoxid Al₂O₃ (Mohs-Härte: 9); Korngröße: d ₅₀ =28 µm; Far- be: Weiß/Grau Anmerkung: Analoge Untersuchungen wurden auch mit anderen Korngrößen durchgeführt.
- FS 3:: Pyrogene Kieselsäure (SiO₂-Nanopartikel); (Mohs-Härte: 7); Korn- größe d ₅₀ =12nm; Farbe: Weiß Anmerkung: Analoge Untersuchungen wurden auch mit anderen Korngrößen durchgeführt.

Die Konzentration der Füllstoffe FS 1, FS 2 und FS 3 in dem als Matrix eingesetzten Polyurethan-Flugzeugdecklack wurde jeweils auf 10 Gew.-% eingestellt, bezogen auf die Gesamtmasse des Lacks.

Als Gegenkörper wurde in den Untersuchungen Titan eingesetzt, der Abriebtest wurde mit einem Prüfstand gemäß PrEN 6124 durchgeführt, vgl. Beispiel 1.

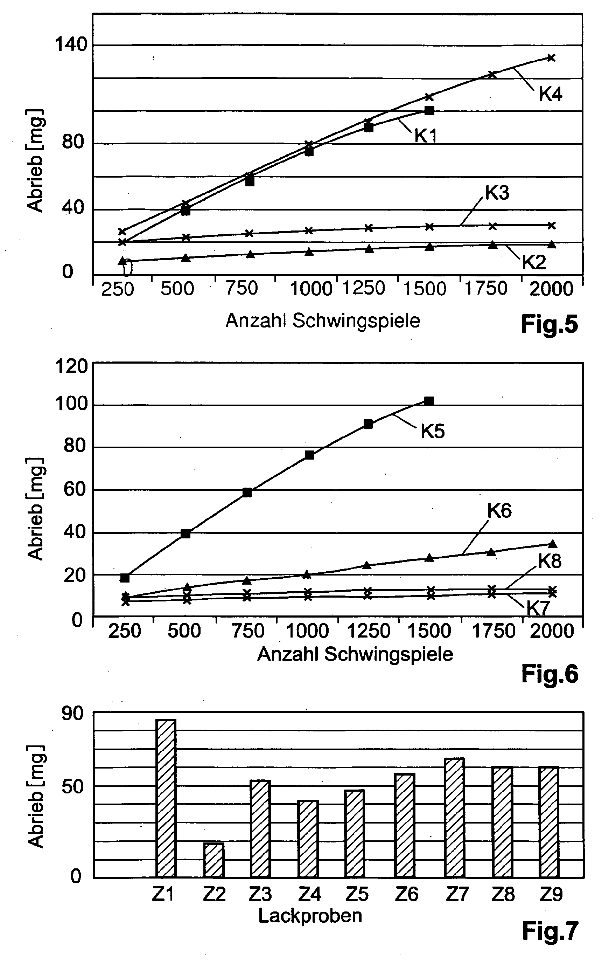

Der Einfluss der Korngröße (sowie des Füllstoffmaterials) ergibt sich aus Fig. 5. Die Anzahl der Schwingspiele ist auf der Abszisse abgetragen und reicht bis 2000, die Abriebsmenge ist in mg auf der Ordinate abgetragen und reicht bis 140 mg. Es wurden die folgenden Beschichtungen untersucht:
- K1:: Standard-Polyurethan-Flugzeugdecklacksystem;
- K2:: Standard-Polyurethan-Flugzeugdecklacksystem mit 10% des Füllstoffes FS 1(d₅₀ = 1,5 µm);
- K3:: Standard-Polyurethan-Flugzeugdecklacksystem mit 10% des Füllstoffes FS 2 (d5₀ ca. 28 µm);
- K4:: Standard-Polyurethan-Flugzeugdecklacksystem mit 10% des Füllstoffs FS 3 (d₅₀ = 12 nm).

Man erkennt, dass sämtliche mit Füllstoffen versehenen Polyurethanlacke gegenüber dem Standard-Polyurethan-Flugzeugdecklacksystem verbesserte Abriebeigenschaften besaßen oder zumindest gleichwertig waren. Am überzeugendsten war die Leistung des Systems K2 unter Verwendung von 10% des Füllstoffes FS 1, was vermutlich in erster Linie auf die ausgewählte Korngröße zurückzuführen ist.

Weitere Untersuchungen haben gezeigt, dass besonders kleine und besonders große Korngrößen (innerhalb des erfindungsgemäß einzuhaltenden Intervalls) bei Verwendung harter Füllstoffe häufig zu schlechteren Ergebnissen führten als Korngrößen in einem mittleren Bereich von 1,5 bis 15 µm.

### 4.2 Weiche Füllstoffe:

Ausgehend von einem Flugzeugdecklacksystem auf Polyurethanbasis (basierend auf aliphatischen Komponenten) wurden Lacke mit hochabriebfesten, weichen Füllstoffen verschiedener Korngröße und Materialart hergestellt.
- FS 4:: Ultrahochmolekulares Polyethylen-Polymer GUR 2126 der Fa. Tico- na: Korngröße d₅₀ im Bereich von ca. 25-30 µm gemäß eigenen Un- tersuchungen keine d₅₀ - Angaben seitens des Herstellers; Farbe:. weiß - creme; Form: festes Pulver; Dichte: 0,93 g/cm³, Schüttdichte: (DIN 53466) mindestens 0,4 kg/m³; Mohs-Härte: ca. 2-2,5; Schmelz- temperatur: DSC, 10 K/min (ISO 3146 Methode C): 130-135 °C (Pul- ver).

Die Konzentration des Füllstoffes FS 4 in dem als Matrix eingesetzten Polyurethan-Flugzeugdecklack wurde auf 5, 10 bzw. 15 % eingestellt, bezogen auf die Gesamtmasse des Lacks.

Als Gegenkörper wurde in den Untersuchungen Titan eingesetzt, der Abriebtest wurde mit einem Prüfstand gemäß PrEN 6124 durchgeführt, vgl. Beispiel 1.

Der Einfluss der Korngröße ergibt sich aus Fig. 6. Die Anzahl der Schwingspiele ist wiederum auf der Abszisse abgetragen und reicht bis 2000, die Abriebsmenge ist erneut in mg auf der Ordinate abgetragen. Es wurden die folgenden Beschichtungen untersucht:
- K5:: Standard-Polyurethan-Flugzeugdecklacksystem;
- K6:: Standard-Polyurethan-Flugzeugdecklacksystem mit 5 % des Füllstoffes FS 4
- K7:: Standard-Polyurethan-Flugzeugdecklacksystem mit 10 % des Füllstoffes FS 4
- K8:: Standard-Polyurethan-Flugzeugdecklacksystem mit 15 % des Füllstoffes Fs 4

Man erkennt, dass mit sämtlichen Konzentrationen des Füllstoffs FS 4 verbesserte Abriebeigenschaften erreicht wurden. Beim Übergang von 10 % des Füllstoffes FS 4 auf 15 % des Füllstoffes FS 4 (Übergang von K7 auf K8) ließ sich keine weitere Verbesserung mehr feststellen.

In ergänzenden Untersuchungen wurden die Reibwerte µ in Abhängigkeit von der Anzahl der Schwingspiele für das Flugzeugdecklacksystem K7 bestimmt. Auch nach 2000 Schwingspielen lag der Reibwert nicht höher als 0,33. Im Vergleich damit lag der Reibwert µ für das Standard-Polyurethan-Flugzeugdecklacksystem K5 (ohne Füllstoffzusatz) bereits nach nur 500 Schwingspielen deutlich über 0,4.

### Beispiel 5: Einfluss der Füllstoffkonzentration auf die Abriebbeständigkeit:

Auch die Konzentration der harten Füllstoffe in der Polyurethanlackmatrix hat Einfluss auf die Abriebbeständigkeit eines fertigen Lackes.

In Figur 7 sind die Abriebmengen in mg bei Reibversuchen mit einem Taber^{®} Abraser 1000 U, 1000 g, Rolle CS 17 bei unterschiedlichen Füllstoffmengen in einem Diagramm dargestellt. Als Füllstoffmengen wurden zu Standard-Polyurethan-Flugzeugdecklack-systemen folgende Füllstoffe und Füllstoffmengen beigegeben:
- Z1: keine Füllstoffzugabe;
- Z2: 10 % anorganischer Füllstoff FS 1 (d₅₀=1,5 µm);
- Z3: 20 % anorganischer Füllstoff FS 1 (d₅₀=1,5 µm);
- Z4: 30 % anorganischer Füllstoff FS 1 (d₅₀=1,5 µm);
- Z5: 10% anorganischer Füllstoff FS 2 (d₅₀=28 µm);
- Z6: 20% anorganischer Füllstoff FS 2 (d₅₀=28 µm);
- Z7: 30% anorganischer Füllstoff FS 2 (d₅₀=28 µm);
- Z8: 10% anorganischer Füllstoff FS 3 (d₅₀=12 nm);
- Z9: 20% anorganischer Füllstoff FS 3 (d₅₀=12 nm).

Aus Fig. 7 ergibt sich, dass bei Einsatz der Füllstoffe FS 1 bzw. FS 2 jeweils eine Konzentration von 10 Gew.-% Füllstoff in der Polyurethan-Matrix eine bessere Abriebbeständigkeit resultierte als mit entsprechenden Lacke mit Anteilen von 20 bzw. 30 Gew.-% Füllstoff. Insgesamt erwies sich in einer Vielzahl von Untersuchungen der Konzentrationsbereich von 7 bis 15 Gew.-% als besonders vorteilhaft.

## Patentansprüche

1. Verwendung eines Lackes umfassend
- eine Polyurethanmatrix auf Basis aliphatischer Komponenten und
- in die Polyurethanmatrix eingebettete, die Abriebbeständigkeit erhöhende Füllstoffe
als abriebfeste Beschichtung von (a) Flugzeuglandeklappen (2; 2') im Kontaktbereich mit den Spoilern (4) oder (b) im Scheuerbereich der Cargo Doors oder (c) im Scheuerbereich anderer im Betrieb mechanisch aufeinander reibender Flugzeugbauteile.

2. Verwendung nach Anspruch 1, wobei die Füllstoffe ausgewählt sind aus der Gruppe bestehend aus:
Füllstoffen mit einer Mohs-Härte von zumindest 7 und einer Korngröße 0,1 µm < d₅₀ < 30 µm,
Füllstoffen mit einer Mohs-Härte von höchstens 2 und einer Korngröße 3 µm < d₅₀ < 50 µm
und deren Mischungen.

3. Verwendung nach Anspruch 2, wobei
die Füllstoffe mit einer Mohs-Härte von zumindest 7 und einer Korngröße µm < d₅₀ < 30 µm keramische Füllstoffe sind
und/oder
die Füllstoffe mit einer Mohs-Härte von höchstens 2 und einer Korngröße 3 µm < d₅₀ < 50 µm Kunststoff-Füllstoffe sind.

4. Verwendung nach Anspruch 3, wobei
die keramischen Füllstoffe ausgewählt sind aus der Gruppe bestehend aus:
Siliciumcarbid, Siliciumdioxid, Aluminiumoxid, Zirkonoxid, Spinell und deren Mischungen.

5. Verwendung nach einem der Ansprüche 2 bis 4, wobei
eine Mischung von
Füllstoffen mit einer Mohs-Härte von zumindest 7 und einer Korngröße 0,1 µm < d₅₀ < 30 µm
und
Füllstoffen mit einer Mohs-Härte von höchstens 2 und einer Korngröße 3 µm < d₅₀ < 50 µm
eingesetzt wird,
wobei das Gewichtsverhältnis der Füllstoffe im Bereich von 1 : 9 bis 9 : 1 liegt.

6. Verwendung nach einem der Ansprüche 2 bis 5, wobei
der Anteil an Füllstoffen mit einer Mohs-Härte von zumindest 7 und einer Korngröße 0,1µm < d₅₀ < 30 µm im Bereich von 5 bis 35 Gew.-%, vorzugsweise im Bereich von 7 bis 15 Gew.-%
und/oder
der Anteil an Füllstoffen mit einer Mohs-Härte von höchstens 2 und einer Korngröße 3 µm < d₅₀ < 50 µm im Bereich von 5 bis 35 Gew.-%, vorzugsweise im Bereich von 7 bis 15 Gew.-% liegt,
jeweils bezogen auf die Gesamtmasse des Lackes.

7. Flugzeug-Landeklappe (2; 2') mit einer abriebfesten Beschichtung im Kontaktbereich mit den Spoilern (4), wobei die Beschichtung aus einem ausgehärteten Lack besteht, umfassend oder bestehend aus:
- einer Polyurethanmatrix auf Basis aliphatischer Komponenten und
- in die Polyurethanmatrix eingebetteten, die Abriebbeständigkeit erhöhenden Füllstoffen.

8. Flugzeug-Landeklappe (2; 2') nach Anspruch 7, wobei ein Lack gemäß einem der Ansprüche 9 bis 13 verwendet wird.

9. Abriebfester Lack zur Beschichtung von Flugzeuglandeklappen (2; 2') im Kontaktbereich mit den Spoilern (4), umfassend
- eine Polyurethanmatrix auf Basis aliphatischer Komponenten und
- in die Polyurethanmatrix eingebettete, die Abriebbeständigkeit erhöhende Füllstoffe,
wobei die Füllstoffe ausgewählt sind aus der Gruppe bestehend aus:
Füllstoffen mit einer Mohs-Härte von zumindest 7 und einer Korngröße 0,1µm < d₅₀ < 30 µm
und
Mischungen solcher Füllstoffe mit Füllstoffen mit einer Mohs-Härte von höchstens 2 und einer Korngröße 3 µm < 0₅₀ < 50 µm.

10. Abriebfester Lack nach Anspruch 9, wobei
die Füllstoffe mit einer Mohs-Härte von zumindest 7 und einer Korngröße 0,1µm < d₅₀ < 30 µm keramische Füllstoffe sind
und/oder
die Füllstoffe mit einer Mohs-Härte von höchstens 2 und einer Korngröße 3 µm < d₅₀ < 50 µm Kunststoff-Füllstoffe sind.

11. Abriebfester Lack nach einem der Ansprüche 9 und 10, wobei die keramischen Füllstoffe ausgewählt sind aus der Gruppe bestehend aus:
Siliciumcarbid, Siliciumdioxid, Aluminiumoxid, Zirkonoxid, Spinell, Bornitrid und deren Mischungen.

12. Abriebfester Lack nach einem der Ansprüche 9 bis 11, wobei
eine Mischung von
Füllstoffen mit einer Mohs-Härte von zumindest 7 und einer Korngröße 0,1µm < d₅₀ < 30 µm
und
Füllstoffen mit einer Mohs-Härte von höchstens 2 und einer Korngröße 3 µm < d₅₀ < 50 µm
eingesetzt wird,
wobei das Gewichtsverhältnis der Füllstoffe im Bereich von 1 : 9 bis 9 : 1 liegt.

13. Abriebfester Lack nach einem der Ansprüche 9 bis 12, wobei
der Anteil an Füllstoffen mit einer Mohs-Härte von zumindest 7 und einer Korngröße 0,1µm < d₅₀ < 30 µm im Bereich von 5 bis 35 Gew.-%, vorzugsweise im Bereich von 7 bis 15 Gew.-%
und/oder
der Anteil an Füllstoffen mit einer Mohs-Härte von höchstens 2 und einer Korngröße 3 µm < d₅₀ < 50 µm im Bereich von 5 bis 35 Gew.-%, vorzugsweise im Bereich von 7 bis 15 Gew.-% liegt,
jeweils bezogen auf die Gesamtmasse des Lackes.

## Claims

1. Use of a lacquer comprising
- a polyurethane matrix based on aliphatic components and
- fillers which are embedded in the polyurethane matrix and increase the abrasion resistance
as an abrasion-resistant coating of (a) aircraft landing flaps (2; 2') in the contact zone with the spoilers (4) or (b) in the abrasive zone of the cargo doors or (c) in the abrasive zone of other aircraft components which mechanically produce friction on one another during operation.

2. Use according to claim 1, wherein the fillers are chosen from the group consisting of:
fillers with a Mohs hardness of at least 7 and a particle size of 0.1 µm < d₅₀ < 30 µm,
fillers with a Mohs hardness of at most 2 and a particle size of 3 µm < d₅₀ < 50 µm
and mixtures thereof.

3. Use according to claim 2, wherein
the fillers with a Mohs hardness of at least 7 and a particle size of 0.1 µm < d₅₀ < 30 µm are ceramic fillers
and/or
the fillers with a Mohs hardness of at most 2 and a particle size of 3 µm < d₅₀ < 50 µm are plastics fillers.

4. Use according to claim 3, wherein
the ceramic fillers are chosen from the group consisting of:
silicon carbide, silicon dioxide, aluminium oxide, zirconium oxide, spinel and mixtures thereof.

5. Use according to one of claims 2 to 4, wherein
a mixture of
fillers with a Mohs hardness of at least 7 and a particle size of 0.1 µm < d₅₀ < 30 µm
and
fillers with a Mohs hardness of at most 2 and a particle size of 3 µm < d₅₀ < 50 µm is employed,
the weight ratio of the fillers being in the range of from 1 : 9 to 9 : 1.

6. Use according to one of claims 2 to 5, wherein
the content of fillers with a Mohs hardness of at least 7 and a particle size of 0.1 µm < d₅₀ < < 30 µm is in the range of from 5 to 35 wt%, preferably in the range of from 7 to 15 wt.%
and/or
the content of fillers with a Mohs hardness of at most 2 and a particle size of 3 µm < d₅₀ < < 50 µm is in the range of from 5 to 35 wt,%, preferably in the range of from 7 to 15 wt.%,
in each case based on the total weight of the lacquer.

7. Aircraft landing flap (2; 2') with an abrasion-resistant coating in the contact zone with the spoilers (4), wherein the coating consists of a cured lacquer comprising or consisting of:
- a polyurethane matrix based on aliphatic components and
- fillers which are embedded in the polyurethane matrix and increase the abrasion resistance.

8. Aircraft landing flap (2; 2') according to claim 7, wherein a lacquer according to one of claims 9 to 13 is used.

9. Abrasion-resistant lacquer for coating aircraft landing flaps (2; 2') in the contact zone with the spoilers (4), comprising
- a polyurethane matrix based on aliphatic components and
- fillers which are embedded in the polyurethane matrix and increase the abrasion resistance,
wherein the fillers are chosen from the group consisting of:
fillers with a Mohs hardness of at least 7 and a particle size of 0.1 µm < d₅₀ < 30 µm and
mixtures of such fillers with fillers with a Mohs hardness of at most 2 and a particle size of 3 µm < d₅₀ < 50 µm.

10. Abrasion-resistant lacquer according to claim 9, wherein
the fillers with a Mohs hardness of at least 7 and a particle size of 0.1 µm < d₅₀ < 30 µm are ceramic fillers
and/or
the fillers with a Mohs hardness of at most 2 and a particle size of 3 µm < d₅₀ < 50 µm are plastics fillers.

11. Abrasion-resistant lacquer according to one of claims 9 and 10, wherein
the ceramic fillers are chosen from the group consisting of:
silicon carbide, silicon dioxide, aluminium oxide, zirconium oxide, spinel, boron nitride and mixtures thereof.

12. Abrasion-resistant lacquer according to one of claims 9 to 11, wherein
a mixture of
fillers with a Moths hardness of at least 7 and a particle size of 0.1 µm < d₅₀ < 30 µm and
fillers with a Mohs hardness of at most 2 and a particle size of 3 µm < d₅₀ < 50 µm is employed,
the weight ratio of the fillers being in the range of from 1 : 9 to 9 : 1.

13. Abrasion-resistant lacquer according to one of claims 9 to 12, wherein
the content of fillers with a Mohs hardness of at least 7 and a particle size of 0.1 µm < d₅₀ < 30 µm is in the range of from 5 to 35 wt.%, preferably in the range of from 7 to 15 wt.% and/or
the content of fillers with a Mohs hardness of at most 2 and a particle size of 3 µm < d₅₀ < 50 µm is in the range of from 5 to 35 wt.%, preferably in the range of from 7 to 15 wt.%,
in each case based on the total weight of the lacquer.

## Revendications

1. Utilisation d'un vernis, comprenant
- une matrice en polyuréthanne à base de composants aliphatiques, et
- des charges augmentant la résistance à l'usure, incorporées dans la matrice en polyuréthanne, en tant que revêtement résistant à l'usure de (a) volets d'atterrissage d'avion (2 ; 2') dans la zone de contact avec les déporteurs (4), ou (b) dans le domaine du frottement des portes de cargo, ou (c) dans le domaine de l'abrasion d'autres pièces d'avion, frottant mécaniquement l'une contre l'autre en fonctionnement.

2. Utilisation selon la revendication 1, où les charges sont choisies parmi le groupe consistant en :
des charges à dureté Mohs d'au moins 7 et une granulométrie située dans l'intervalle 0,1 µm < d₅₀ < 30 µm,
des charges à dureté Mohs d'au maximum 2 et une granulométrie située dans l'intervalle 3 µm < d₅₀ < 50 µm,
et leurs mélanges.

3. Utilisation selon la revendication 2, où
les charges à dureté Mohs d'au moins 7 et une granulométrie située dans l'intervalle 0,1 µm < d₅₀ < 30 µm, sont des charges céramiques,
et/ou
les charges à dureté Mohs d'au maximum 2 et une granulométrie située dans l'intervalle 3 µm < d₅₀ < 50 µm, sont des charges plastiques.

4. Utilisation selon la revendication 3, où
les charges céramiques sont choisies parmi le groupe consistant en :
le carbure de silicium, le dioxyde de silicium, l'oxyde d'aluminium, l'oxyde de zirconium, le spinelle et leurs mélanges.

5. Utilisation selon l'une des revendications 2 à 4, où l'on met en oeuvre un mélange
de charges à dureté Mohs d'au moins 7 et une granulométrie située dans l'intervalle 0,1 µm < d₅₀ < 30 µm, et
de charges à dureté Mohs d'au maximum 2 et une granulométrie située dans l'intervalle 3 µm < d₅₀ < 50 µm,
où le rapport pondéral des charges se situe dans l'intervalle allant de 1:9 à 9:1.

6. Utilisation selon l'une des revendications 2 à 5, où
la quantité de charges à dureté Mohs d'au moins 7 et une granulométrie située dans l'intervalle 0,1 µm < d₅₀ < 30 µm se situe dans l'intervalle allant de 5 à 35 % en poids, de préférence dans l'intervalle allant de 7 à 15 % en poids,
et/ou
la quantité de charges à dureté Mohs d'au maximum 2 et une granulométrie située dans l'intervalle 3 µm < d₅₀ < 50 µm se situe dans l'intervalle allant de 5 à 35 % en poids, de préférence dans l'intervalle allant de 7 à 15 % en poids
chaque fois sur base de la masse totale de vernis.

7. Volets d'atterrissage d'avion (2 ; 2') avec un revêtement résistant à l'usure dans la zone de contact avec les déporteurs (4), où le revêtement consiste en un vernis durci, comprenant ou consistant en :
- une matrice en polyuréthanne à base de composants aliphatiques, et
- des charges augmentant la résistance à l'usure, incorporées dans la matrice en polyuréthanne.

8. Volets d'atterrissage d'avion (2 ; 2') selon la revendication 7, où l'on utilise un vernis selon l'une des revendications 9 à 13.

9. Vernis résistant à l'usure pour le revêtement de volets d'atterrissage d'avion (2 ; 2') dans la zone de contact avec les déporteurs (4), comprenant :
- une matrice en polyuréthanne à base de composants aliphatiques, et
- des charges augmentant la résistance à l'usure, incorporées dans la matrice en polyuréthanne,
où les charges sont choisies parmi le groupe consistant en :
des charges à dureté Mohs d'au moins 7 et une granulométrie située dans l'intervalle 0,1 µm < d₅₀ < 30 µm,
des mélanges de telles charges avec des charges à dureté Mohs d'au maximum 2 et une granulométrie située dans l'intervalle 3 µm < d₅₀ < 50 µm.

10. Vernis résistant à l'usure selon la revendication 9, où
les charges à dureté Mohs d'au moins 7 et une granulométrie située dans l'intervalle 0,1 µm < d₅₀ < 30 µm, sont des charges céramiques,
et/ou
les charges à dureté Mohs d'au maximum 2 et une granulométrie située dans l'intervalle 3 µm < d₅₀ < 50 µm, sont des charges plastiques.

11. Vernis résistant à l'usure selon l'une des revendications 9 et 10, où
les charges céramiques sont choisies parmi le groupe consistant en :
le carbure de silicium, le dioxyde de silicium, l'oxyde d'aluminium, l'oxyde de zirconium, le spinelle, le nitrure de bore et leurs mélanges.

12. Vernis résistant à l'usure selon l'une des revendications 9 à 11, où
l'on met en ouvre un mélange
de charges à dureté Mohs d'au moins 7 et une granulométrie située dans l'intervalle 0,1 µm d₅₀ < 30 µm,
et
de charges à dureté Mohs d'au maximum 2 et une granulométrie située dans l'intervalle 3 µm < d₅₀ < 50 µm,
où le rapport pondéral des charges se situe dans l'intervalle allant de 1:9 à 9:1.

13. Vernis résistant à l'usure selon l'une des revendications 9 à 12, où
la quantité de charges à dureté Mohs d'au moins 7 et une granulométrie située dans l'intervalle 0,1 µm < d₅₀ < 30 µm se situe dans l'intervalle allant de 5 à 35 % en poids, de préférence dans l'intervalle allant de 7 à 15 % en poids,
et/ou
la quantité de charges à dureté Mohs d'au maximum 2 et une granulométrie située dans l'intervalle 3 µm < d₅₀ < 50 µm se situe dans l'intervalle allant de 5 à 35 % en poids, de préférence dans l'intervalle allant de 7 à 15 % en poids
chaque fois sur base de la masse totale de vernis.
